# EUROPEAN PATENT SPECIFICATION

(11) **EP 1 843 448 B1**
(45) Date of publication and mention of the grant of the patent: **23.09.2009**
(21) Application number: 07103825.1
(22) Date of filing: 09.03.2007
(51) Int. Cl.: H02K 1/27, H02K 19/10

(54) **Motor**
Motor
Moteur

(30) Priority: 17.03.2006 KR 20060024999
(43) Date of publication of application: 10.10.2007
(73) Proprietor: LG Electronics Inc., Seoul, 150-721 (KR)
(72) Inventor: Shim, Jang-Ho, 327-23, Gasan-dong, Geumcheo-gu (KR); Lee, Seong-Ho, 1587-5, Gyeonggi-Do (KR); Kim, Jae-Min, Seoul (KR); Choi, Jae-Hak, Seoul (KR); Park, Jin-Soo, Incheon (KR)
(74) Representative: Vossius & Partner

(56) References cited:
- EP-A- 1 283 581
- US-A- 3 068 373
- US-A- 5 187 401

## Description

The present invention relates to a motor, and more specifically, to the highly efficient motor that can overcome braking torque by permanent magnets when they are in transition state and start normally, and that can generate magnetic flux while the motor is running in normal operation of synchronous speed.

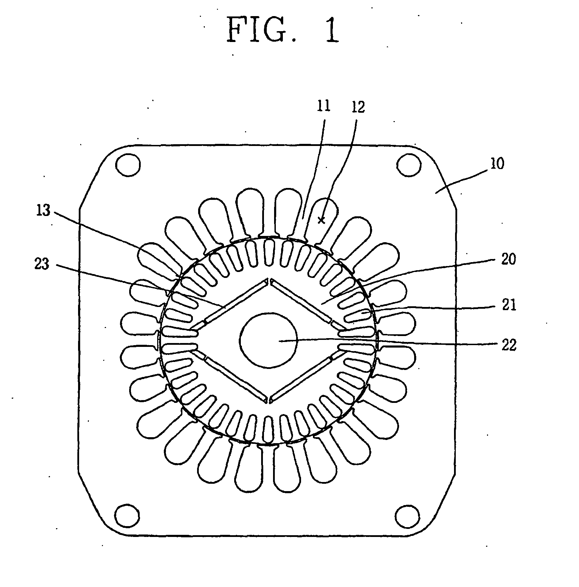

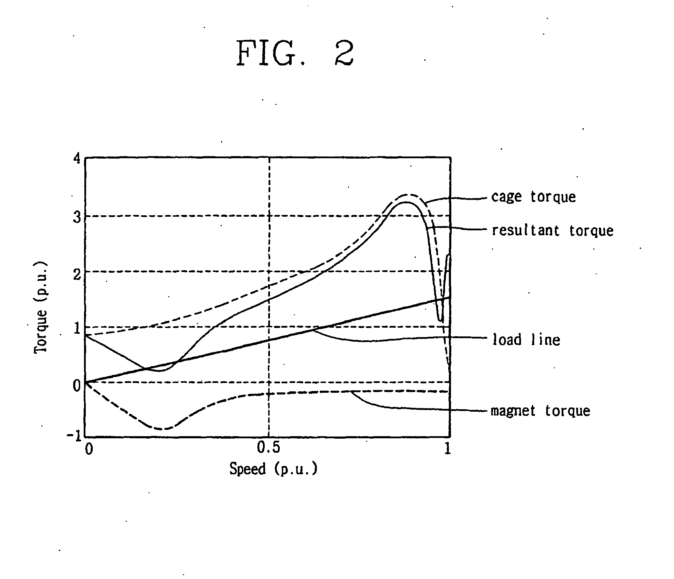

Figure 1 is a schematic view of a motor according to a conventional art, and Figure 2 is a graph illustrating the torque characteristics in relation to the change of the motor's speed.

A motor with burled magnets is described in document EP 1 283 581.

Referring to Figure 1, the motor according to the conventional art is composed of: a plurality of teeth 11 that form a plurality of slots 12; a through hole 13 formed at the center by the tips of the teeth 11; a stator 10 with a coil (not shown) wound around the teeth 11 which generate rotating magnetic field by applying electricity; an axle hole 22 that is rotatably inserted into the through hole 13 and into which a rotating axle (not shown) is inserted; four permanent magnets 23 that are disposed in a rhombus shape around the axle hole 22; and a rotator 20 with a plurality of cage bars 21 that are disposed at constant intervals along the circumferential direction.

Hereinafter, a review of how such motors run will be described, with reference to Figure 2.

The composition of the torque from a motor is largely composed of cage torque by the cage bars 21 and magnet torque by the permanent magnets 23.

In transition state, cage torque by the cage bars 21 and magnet torque by the permanent magnet 23 are generated, and the rotator 20 starts to accelerate because of the resultant torque of the two components. At this moment, magnet torque functions as a negative braking torque. In other words, magnetic torque is within the range of between 0 and -1 depending on the rotation speed.

When it reaches the synchronous speed, cage torque is not generated any more as the speed of the rotating magnetic field and the rotation speed of the rotator 20 become equal and induced voltage by the cage bars 21 is not generated any more. That is, as shown in Figure 2, when the rotation speed surpasses 1, cage torque drops to 0.

Therefore, while the motor is operating normally in synchronous speed, the rotator 20 rotates by only the magnetic torque from the permanent magnets 23.

In other words, the cage bars 21 can only generate the cage torque to accelerate the rotator 20 in transition state, but in normal operating state, it cannot generate torque to accelerate the rotator 20 once the motor reaches synchronous speed. Due to the reason, the motor runs inefficiently.

According to document US 3068373, motor start and acceleration up to synchronous speed can be improved by a squirrel cage structure comprising an annular hysteresis band and two end rings

An object of the present invention is to provide a highly efficient motor that can overcome the braking torque by permanent magnet when they are in transition state and start normally and generate magnetic flux in normal operation of synchronous speed. This object is achieved with the features of the claims.

To achieve these and other advantages and in accordance with the purpose of the present invention, as embodied and broadly described herein, there is provided a motor which includes: a stator including a plurality of teeth that forms a plurality of slots, a through hole formed in the center by the tips of the plurality of teeth, and a coil that is wound around the teeth and generates rotating magnetic field by applying electricity; a rotator that is rotatably inserted in the through hole and has an axle hole into which a rotating axle is inserted and a plurality of permanent magnets disposed around the axle hole; and a hysteresis band that is disposed on an outer periphery of the rotator.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic view of a motor according to a conventional art;
Figure 2 is a graph illustrating torque characteristics in relation to the speed change of the motor;
Figure 3 is a schematic view of a motor according to an embodiment of the present invention; and
Figure 4 is a graph illustrating torque characteristics in relation to the speed change of the motor of Figure 3.

Reference will now be made in detail to the preferred embodiments of the present invention, examples of which are illustrated in the accompanying drawings.

Hereinafter, a motor according to an embodiment of the present invention will be described in detail with reference to the accompanying drawings.

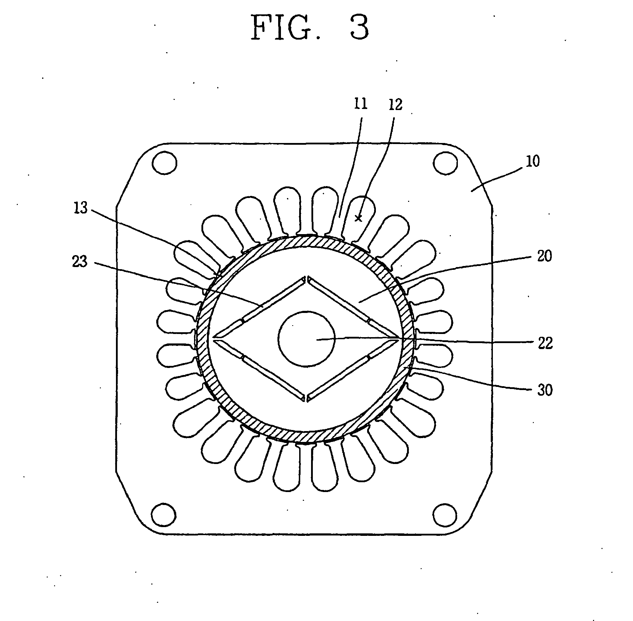

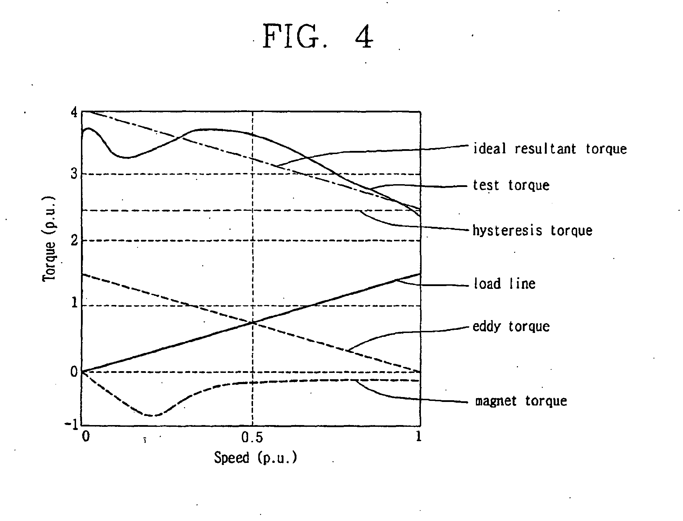

Figure 3 is a schematic view of the motor according to the embodiment of the present invention. Figure 4 is a graph illustrating torque characteristics in relation to the speed change of the motor of Figure 3. In the embodiment, the same components as those of Figures 1 and 2 will be denoted by the same reference numerals, and detailed description thereof will be omitted

As shown in Figures 3 and 4, a motor according to the embodiment of the present invention includes: a stator 10 that has a plurality of teeth 11 that form a plurality of slots 12, a through hole 13 formed at the center by the tips of the teeth 11, and a coil (not shown) that is wound around the teeth 11 and generates rotating magnetic field by applying electricity; a rotator 20 that is rotatably inserted in the through hole 13 and has an axle hole 22 into which a rotating axle is inserted (not shown) and a plurality of permanent magnets 23 disposed around the axle hole 22; and a hysteresis band 30 that is disposed on an outer periphery of the rotator 20.

The four permanent magnets 23 are disposed in a rhombus shape at predetermined intervals around the axle hole 22.

The hysteresis band 30 is a ring-shaped magnetic body disposed on the outer periphery of the rotator 20 to replace the cage bar (21 in Figure 1). To be more specific, the hysteresis band is composed of a neodymium NdFeB bond magnet that has high coercive force and low magnetic flux density.

Such hysteresis band 30 can be individually built to be attached to the rotator 20, or it can be integrated with the rotator 20 by injection molding.

The above-described hysteresis band 30 solves the problem of the conventional cage bars (21 in Figure 1), i.e., they can only generate cage torque in transition state but no longer can generate cage torque to accelerate the rotator 20 in normal state.

Hereinafter, how the motor operates will be described.

With reference to Figure 4, the motor, in transition state, generates the hysteresis torque by the hysteresis band 30, the eddy torque by the eddy current within the hysteresis band 30, and the magnetic torque by the permanent magnets 23. The rotator 20 accelerates by the ideal resultant torque which is the total torque of the three torque components. However, in reality, due to load line, the rotator 20 accelerates following the curve pattern of the test torque.

In the meantime, in normal state where the motor runs in synchronous speed, the torque by eddy current disappears but only hysteresis torque and magnetic torque remain. In other words, as shown in Figure 4, eddy torque drops to 0 when the rotation speed surpasses 1.

As a conclusion, in transition state, the negative magnetic torque by the permanent magnets 23 is offset by hysteresis torque and eddy current torque, and in normal state with synchronous speed, the rotator 20 is accelerated by hysteresis torque and magnetic torque. Therefore, the motor can have the advantages of both a hysteresis motor and a permanent magnet motor.

Although the preferred embodiment of the present invention has been described, the present invention is not limited to the embodiment but may be modified in many different forms within the scope defined by the appended claims.

As mentioned above, in the motor according to the embodiment of the present invention, a hysteresis band disposed on the outer periphery of the rotator enhances the efficiency of a motor by overcoming the braking torque by the permanent magnets in transition state, and by enabling normal start-up, and by generating magnetic flux in normal operation with synchronous speed.

## Claims

1. A motor comprising:
a stator (10) including a plurality of teeth (11) that forms a plurality of slots (12), a through hole (13) formed in the center by the tips of the plurality of teeth (11), and a coil that is wound around the teeth and generates rotating magnetic field by applying electricity;
a rotator (20) that is rotatably inserted in the through hole and has an axle hole (22) into which a rotating axle is inserted;
a plurality of permanent magnets (23) located in grooves inside the rotator; and
a hysteresis band (30) off setting the negative magnetic torque by the permanent magnets in transition state and generating the hysteresis torque that rotates the rotator in normal state, wherein the hysteresis band (30) is disposed on an outer periphery of the rotator (20).

2. The motor of claim 1, wherein the hysteresis band is a circular magnetic body.

3. The motor of claim 1 or claim 2, wherein the hysteresis band is a neodymium NdFeB bond magnet that has high coercive force and low magnetic flux density.

## Patentansprüche

1. Motor mit:
einem Ständer mit mehreren Zähnen, die mehrere Schlitze bilden, einem Durchgangsloch, das durch die Spitzen der mehreren Zähne in der Mitte gebildet ist, und einer Spule, die um die Zähne gewickelt ist und ein magnetisches Drehfeld durch Anlegen von Elektrizität erzeugt;
einem Läufer, der in das Durchgangsloch drehbar eingesetzt ist und ein Achsloch hat, in das eine Drehachse eingesetzt ist;
mehreren Permanentmagneten, die in Nuten innerhalb des Läufers liegen; und
einem Hystereseband, das das negative magnetische Drehmoment durch die Permanentmagneten im Übergangszustand kompensiert und das Hysteresedrehmoment erzeugt, das den Läufer im Normalzustand dreht,
wobei das Hystereseband an einem Außenumfang des Läufers angeordnet ist.

2. Motor nach Anspruch 1, wobei das Hystereseband ein kreisförmiger magnetischer Körper ist.

3. Motor nach Anspruch 1 oder Anspruch 2, wobei das Hystereseband ein gebundener Neodym-NdFeB-Magnet ist, der hohe Koerzitivkraft und niedrige magnetische Flußdichte hat.

## Revendications

1. Moteur comprenant :
un stator muni d'une pluralité de dents qui forme une pluralité de fentes, un trou traversant formé, au centre, par les bouts de la pluralité de dents, et une bobine enroulée autour des dents et générant un champ magnétique tournant sous l'action de l'électricité ;
un rotor inséré dans le trou traversant, avec faculté de rotation, et muni d'un trou d'axe dans lequel un axe rotatif est introduit ;
une pluralité d'aimants permanents logés dans des rainures, à l'intérieur du rotor ; et
un ruban hystérétique décalant le couple magnétique négatif par les aimants permanents à l'état transitoire, et générant le couple hystérétique qui fait tourner le rotor à l'état normal,
dans lequel le ruban hystérétique est placé sur une périphérie extérieure du rotor.

2. Moteur selon la revendication 1, dans lequel le ruban hystérétique est un corps magnétique circulaire.

3. Moteur selon la revendication 1 ou la revendication 2, dans lequel le ruban hystérétique est un aimant à combinaison néodyme NdFeB, qui présente une grande force coercitive et une faible densité de flux magnétique.
